# FASCICULE DE BREVET EUROPEEN

(11) **EP 0 537 057 B1**
(45) Date de publication et mention de la délivrance du brevet: **17.05.1995**
(21) Numéro de dépôt: 92402706.3
(22) Date de dépôt: 05.10.1992
(51) Int. Cl.: B60N 2/12

(54) **Glissière pour siège de véhicule à position de retour fixe**
Fahrzeugsitzleitschiene mit Festpunktrückführung
Slide for a vehicle seat with a fixed return position

(30) Priorité: 11.10.1991 FR 9112537
(43) Date de publication de la demande: 14.04.1993
(73) Titulaire: BERTRAND FAURE AUTOMOBILE "B.F.A.", F-91300 Massy (FR)
(72) Inventeur: Droulon, Georges, F-61100 Flers (FR)
(74) Mandataire: Madeuf, René Louis

(56) Documents cités:
- EP-A- 0 411 850
- FR-A- 2 430 330
- FR-A- 2 656 262
- GB-A- 2 234 431
- US-A- 4 648 657
- US-A- 4 671 571
- US-A- 4 881 774

## Description

De plus en plus de constructeurs de véhicules automobiles proposent à leur clientèle des véhicules dits à deux portes, c'est-à-dire avec un habitacle pour quatre personnes, mais dont les passagers arrière, pour entrer et sortir du véhicule, doivent, lorsque les passagers avant ont quitté leur siège, faire pivoter le dossier de chaque siège sur l'assise de ce dernier et faire avancer le tout vers l'avant de l'habitacle en direction du tableau de bord pour dégager un espace suffisant entre le montant de porte et les sièges avant afin de permettre soit l'entrée soit la sortie des passagers à l'arrière du véhicule.

On connaît déjà les glissières à mémoire préréglées permettant le déblocage et le coulissement de chaque siège avant du véhicule après rabattement du dossier sur l'assise. Ces glissières à mémoire permettent la remise en place à la position antérieure du siège considéré après l'entrée ou la sortie des passagers arrière du véhicule, mais ces glissières à mémoire sont lourdes, encombrantes et coûteuses et d'un réglage compliqué.

Elles sont difficiles à utiliser dans des véhicules bas de gamme car elles doivent être simples, peu coûteuses mais également fiables et d'une haute résistance à l'arrachement du fait que de plus en plus les sièges, qu'elles supportent, sont munis de ceintures de sécurité embarquées qui, lors d'un choc, font subir aux glissières des efforts d'arrachement considérables en absorbant de l'énergie, évitant ainsi, aux passagers assis sur ces sièges, des blessures graves.

La présente invention remédie à ces inconvénients en créant des glissières pour sièges de véhicules à position de retour qui sont simples, donc peu coûteuses, puisqu'il n' y a que très peu de pièces à ajouter et cependant, ces glissières à position de retour fixe conservent toutes les qualités de résistance pour être employées avec des sièges à ceinture de sécurité embarquées.

Conformément à l'invention, la glissière pour siège de véhicule à position de retour fixe, dans laquelle le profilé supérieur, pouvant coulisser le long du profilé inférieur solidaire, directement ou indirectement du plancher du véhicule, comporte, d'une manière usuelle, un verrou muni d'un peigne dont les dents coopèrent avec une crémaillère portée par le profilé fixe, le verrou étant articulé sur un axe et soumis à l'action d'un ressort-tige de façon que le peigne du verrou soit engagé dans les dents de la crémaillère (ce qui est connu, par exemple, par US-A-4 881 774), est caractérisée en ce que le fond du profilé inférieur porte un sabot constitué par une pièce en L présentant deux pattes verticales, la patte avant portant un axe sur lequel est monté un verrou dont l'extrémité inférieure, reposant normalement sur le sabot, est rappelée dans cette position par un ressort en cor de chasse solidaire, d'une part, de la patte verticale et, d'autre part, de la partie supérieure du verrou, et en ce que deux paliers portent un arbre aux extrémités duquel sont fixés deux secteurs portant chacun une butée et un pion, chaque pion étant destiné à agir sur chaque verrou pour libérer le peigne de chaque verrou par rapport à la crémaillère puis à faire dégager le verrou contre l'action du ressort, et chaque butée servant de référence pour limiter la course vers l'arrière du profilé supérieur par rapport au profilé inférieur, la limitation étant obtenue lorsque le pion entre en contact avec la partie supérieure de l'aile du sabot.

Suivant une autre caractéristique de l'invention, lors du désaccouplement des peignes des verrous par rapport aux crémaillières des profilés fixes pour permettre le mouvement des profilés supérieurs par rapport aux profilés inférieurs, la stabilité du déverrouillage est obtenue du fait que les pions dépassent le point mort du système constitué par les secteurs et, de ce fait, le réenclenchement ne peut se faire que par retour du dossier dans une position tendant vers la verticale.

Diverses autres caractéristiques de l'invention ressortent d'ailleurs de la description détaillée qui suit.

Une forme de réalisation de l'objet de l'invention est représentée, à titre d'exemples non limitatifs, aux dessins annexés.

La fig. 1 est une élévation latérale d'une des glissières utilisées pour un siège avant comportant la disposition retour fixe.

La fig. 2 est un plan montrant les deux glissières d'un siège conforme à l'invention.

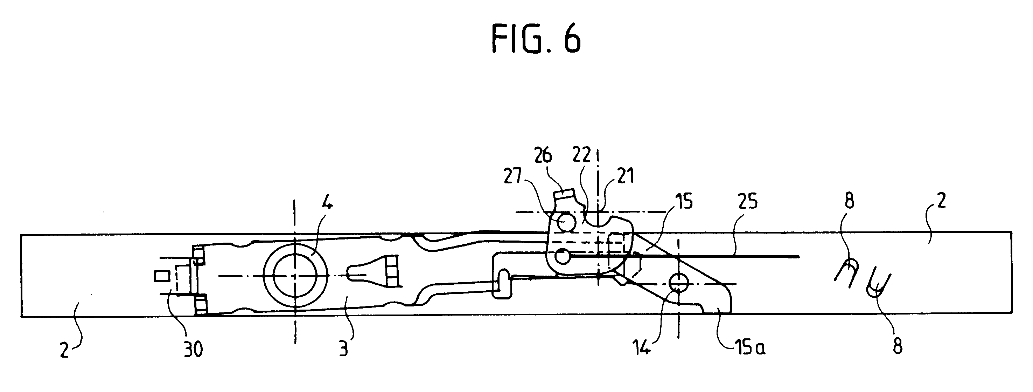

Les fig. 3, 4, 5 et 6 sont des élévations latérales schématiques montrant le mouvement des pièces constituant le profilé supérieur d'une glissière à position de retour fixe.

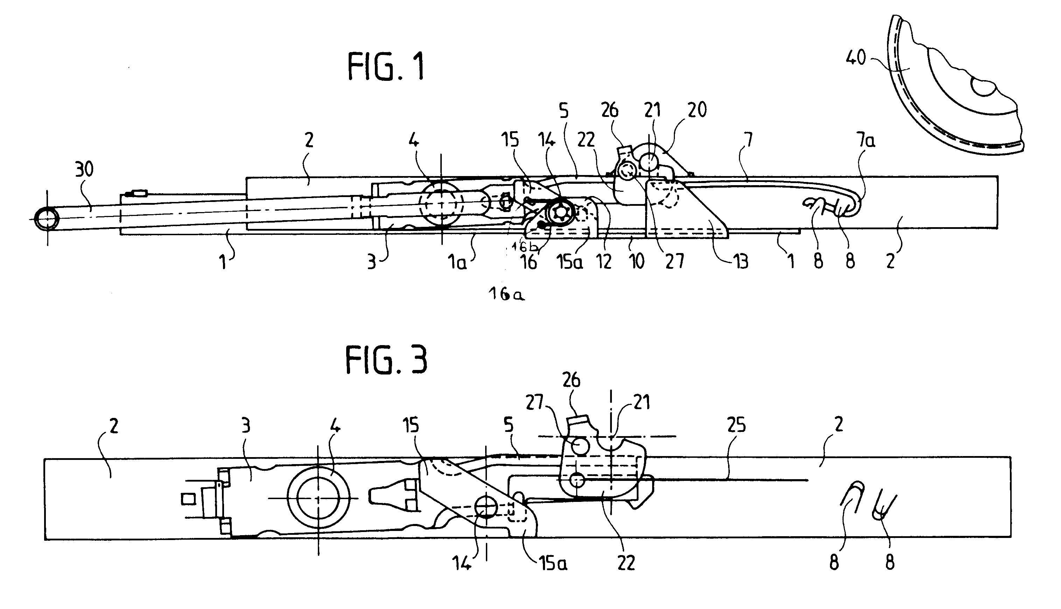

A la fig. 1, on a représenté le profilé inférieur 1 d'une glissière de siège de véhicule automobile, ce profilé 1 étant fixé d'une manière usuelle, directement ou indirectement au plancher du véhicule.

En général, chaque siège avant (conducteur et passager) est muni de deux glissières sensiblement parallèles dont la deuxième partie est constituée par un profilé supérieur 2 venant recouvrir le profilé inférieur 1 avec interposition, entre ces deux profilés qui ont, en général, la forme d'un W, en position normale pour le profilé inférieur 1, en position renversée pour le profilé supérieur 2, de billes et d'entretoises afin de faciliter le coulissement de chaque profilé supérieur 2 par rapport à chaque profilé inférieur 1.

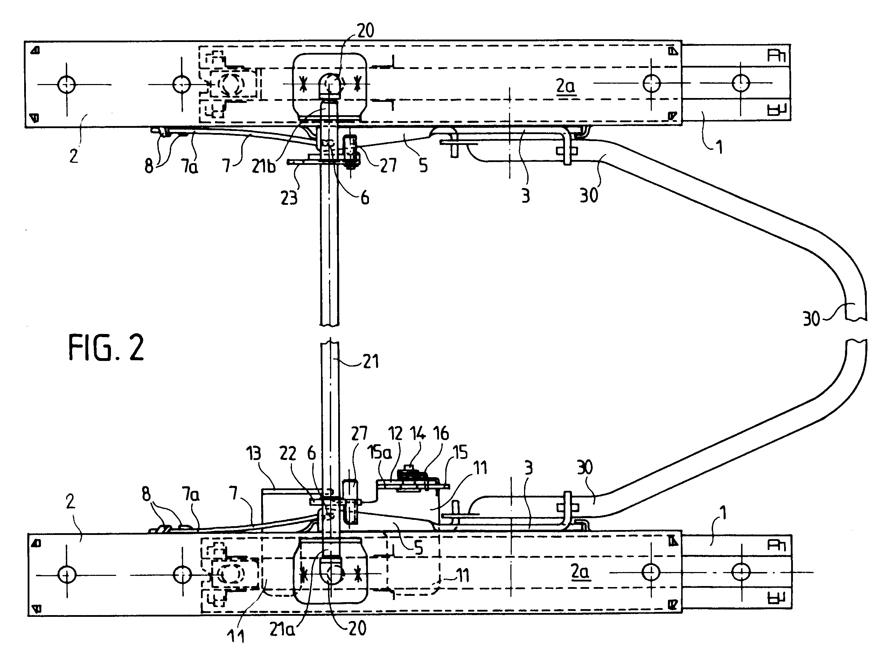

Le profilé 1 porte, sur une de ses ailes (en général l'aile intérieure), des crantages, non représentés, formant une crémaillère destinée à coopérer avec une denture portée par un verrou 3 pour chaque glissière côté intérieur (voir fig. 2), ce verrou à peigne étant articulé sur un axe 4 placé sensiblement à l'avant du verrou 3 considéré.

Ce dernier porte, également à sa partie arrière en 3a, une aile 5 percée, à sa partie arrière, d'une fenêtre 6 permettant l'accrochage d'un ressort-tige 7, fixé par sa partie arrière 7a, sur des pattes 8, constitué par des crevés dans l'aile latérale interne de chaque profilé supérieur 2.

Ce montage est classique et ne nécessite donc aucune autre description.

Dans la présente invention, il est placé, sous la face inférieur 1a du profilé inférieur 1, un sabot 10 constitué par une pièce en L présentant deux plaques inférieures 11, fixées sous le profilé inférieur 1 et deux pattes verticales 12, 13 dont le rôle sera expliqué plus loin.

La patte verticale 12 est percée d'un trou dans lequel est fixé un axe 14 servant d'élément de rotation à un verrou 15 affectant la forme d'un levier dont l'extrémité inférieure 15a repose normalement sur le fond du sabot 10.

Ce levier est rappelé, à sa position normale, par un ressort 16 en cor de chasse dont l'une des extrémités 16a est solidaire du levier 15 tandis que l'autre extrémité 16b est solidaire de la patte verticale 12 de la plaque 11.

Le dessus 2a du profilé supérieur 2 porte deux paliers 20 dans lesquels sont montées les extrémités 21a, 21b d'un arbre 21 pouvant ainsi tourner sur lui-même. Cet arbre 21 porte deux secteurs 22, 23 dont l'un au moins (en général le secteur extérieur 23 dans le cas présent) est relié par un câble 25 au dossier 40 du siège reposant sur les glissières sus- décrites. Le câble 25 est lié, le plus souvent, au flasque externe mobile du dossier de siège qui doit être rabattu sur l'assise du siège avant de ramener celui-ci vers l'avant du véhicule lors de la sortie ou de l'entrée des passagers arrière dans un véhicule à deux portes.

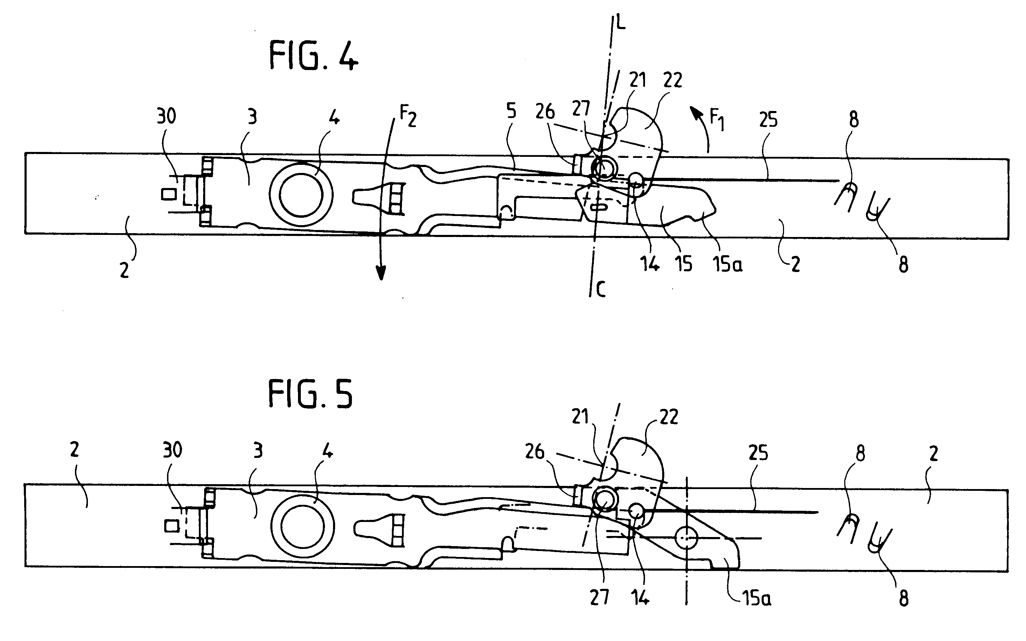

Lors du mouvement de pivotement des secteurs 22, 23 (voir flèche F₁, fig. 4), il se produit, en même temps autour de l'arbre 21, le pivotement des butées 26 terminant les secteurs 22, 23 ainsi que des pions 27 solidaires de ces secteurs 22, 23.

Lorsque les butées 26 appuient sur l'aile 5 des verrous 3 et, qu'en même temps, les pions 27 viennent en contact avec la partie supérieure du verrou 15, les pièces occupent alors la position représentée à la fig. 4.

Ainsi, l'extrémité 15a de chaque verrou 15 ne porte plus sur chaque sabot 10 et, en même temps, les deux verrous 3 ont été abaissés dans le sens de la flèche F₂ (fig. 4), ce qui a pour effet de libérer complètement le profilé supérieur 2 par rapport au profilé inférieur 1 de chaque glissière.

En effet, le pivotement, dans le sens de la flèche F₂, du verrou 3 dégage les dents du peigne du verrou par rapport aux dents de la crémaillère portée par le profilé inférieur 1.

On peut alors aisément repousser le siège avant considéré vers l'avant de l'habitacle du véhicule.

Lorsque les passagers sont sortis ou ont pris place dans la partie arrière du véhicule, on repousse vers l'arrière le ou les sièges avant du véhicule considéré puisque le dossier du siège est toujours rabattu sur l'assise de ce dernier et que donc, aussi bien les verrous 3 que les verrous 15, sont en position représentée à la fig. 4, c'est-à-dire que chaque profilé de glissière est libre par rapport au profilé de glissière inférieur considéré.

Ceci est possible du fait que dans la position représentée à la fig. 4, les pions 27 ont dépassé le point mort représenté par la ligne continue LC, fig. 4.

Cette position est d'ailleurs maintenue par les butées 26 qui prennent appui fortement sur les ailes 5 des verrous 3.

Le siège considéré étant repoussé en arrière, le dossier est alors relevé. Les pions 27 ne portent plus sur les verrous 15 qui reprennent leur position sous l'effet des ressorts 16 en cor de chasse.

De même, les butées 26 dégagent l'arrière des verrous 3 et, sous l'action des ressorts 7, ces verrous se relèvent dans le sens contraire de la flèche F₂, fig. 4. Chaque profilé supérieur 2 se trouve donc verrouillé sur chaque profilé inférieur 1 par pénétration du peigne ou verrou solidaire de chaque profilé 2 dans la crémaillère de chaque profilé inférieur 1.

A ce moment, le passager ou le conducteur peut s'asseoir sur le siège considéré et régler celui-ci de manière usuelle, en manoeuvrant le palonnier 30 équipant normalement les verrous des glissières (voir fig. 2).

Dans le cas où pour une raison quelconque le dossier du siège ne serait pas relevé lorsque les profilés supérieurs 2 sont libres par rapport au profilé inférieur 1 ou que le dossier du siège soit mal relevé et que, de ce fait, les profilés supérieurs 2 puissent coulisser vers l'arrière, les butées 26 n'ont donc pas encore repris leur position normale et, de ce fait, les pions 27 en direction de l'arrière viennent en butée sur la face avant des pattes verticales 13 du sabot 10 limitant ainsi la course vers l'arrière du siège et évitant la sortie des profilés supérieurs 2 par rapport aux profilés inférieurs 1.

## Revendications

1. Glissière pour siège de véhicule à position de retour fixe dans laquelle le profilé supérieur (2), pouvant coulisser le long du profilé inférieur (1) solidaire, directement ou indirectement du plancher du véhicule, comporte, d'une manière usuelle, un verrou (3) muni d'un peigne dont les dents coopèrent avec une crémaillère portée par le profilé fixe (1), le verrou étant articulé sur un axe (4) et soumis à l'action d'un ressort-tige (7) de façon que le peigne du verrou soit engagé dans les dents de la crémaillère, caractérisée en ce que le fond du profilé inférieur (1) porte un sabot (10) constitué par une pièce en L présentant deux pattes verticales (12, 13), la patte avant (12) portant un axe (14) sur lequel est monté un verrou (15) dont l'extrémité inférieure (15a), reposant normalement sur le sabot (10) est rappelée dans cette position par un ressort (16) en cor de chasse solidaire, d'une part, de la patte verticale (12) et, d'autre part, de la partie supérieure du verrou (15), et en ce que deux paliers (20) portent un arbre (21) aux extrémités duquel sont fixés deux secteurs (22, 23) portant chacun une butée (26) et un pion (27), chaque pion (27) étant destiné à agir sur chaque verrou (3) pour libérer le peigne de chaque verrou par rapport à la crémaillère puis à faire dégager le verrou (15) contre l'action du ressort (16), et chaque butée (26) servant de référence pour limiter la course vers l'arrière du profilé supérieur (2) par rapport au profilé inférieur (1), la limitation étant obtenue lorsque le pion (27) entre en contact avec la partie supérieure de l'aile (13) du sabot (10).

2. Glissière suivant la revendication 1, caractérisée en ce que la rotation des secteurs (22, 23) est obtenue au moyen d'un câble (25) attelé, à l'une de ses extrémités, à l'un des secteurs (22, 23), et à son autre extrémité, à la partie rotative du mécanisme d'articulation situé entre l'assise et le dossier (40) du siège considéré.

3. Glissière suivant les revendications 1 et 2, caractérisée en ce que, lors du désaccouplement des peignes des verrous (3) par rapport aux crémaillières des profilés fixes (1) pour permettre le mouvement des profilés supérieurs (2) par rapport aux profilés inférieurs (1), la stabilité du déverrouillage est obtenue du fait que les pions (27) dépassent le point mort du système constitué par les secteurs (22, 23) et, de ce fait, le réenclenchement ne peut se faire que par retour du dossier dans une position tendant vers la verticale.

## Claims

1. Slide for a vehicle seat with a fixed return position, in which the upper profile member (2), slidable along the lower profile member (1) which is fixed, directly or indirectly to the vehicle floor, comprises, in a conventional manner, a latch (3) provided with a comb the teeth of which cooperate with a rack carried by the fixed profile member (1), the latch being pivotally mounted on a spindle (4) and subjected to action of a leaf spring (7) so that the comb of the latch is engaged in the teeth of the rack, characterized in that the bottom portion of the lower profile member (1) carries a shoe (10) made of an L-shaped member having two vertical brackets (12, 13), the front bracket (12) carrying a spindle (14) on which is mounted a latch (15) the lower end (15a) of which, that normally bears on the shoe (10), is returned to this position by a coil shaped spring (16) which is rigidly connected, on the one hand, to the vertical bracket (12) and, on the other hand, to the upper portion of the latch (15), and in that two bearing elements (20) carry a shaft (21) at the ends of which are fixed two sectors (22, 23) each supporting an abutment (26) and a pin (27), each pin (27) being designed to act on each latch (3) for disengaging the comb of each latch from the rack and then disengaging the latch (15) against action of the spring (16), and each abutment (26) being used as a reference for limiting the rearward stroke of the upper profile member (2) with respect to the lower profile member (1), the limitation being obtained when the pin (27) comes into contact with the upper portion of the bracket (13) of the shoe (10).

2. Slide according to claim 1, characterized in that the rotation of the sectors (22, 23) is obtained by means of a cable (25) attached, at one of its ends, to one of the sectors (22, 23) and, at its other end, to the rotaty portion of the articulation mechanism situated between the sitting portion and the backing portion (40) of the respective seat.

3. Slide according to claims 1 and 2, characterized in that, upon disengaging the combs of the latches (3) with respect to the racks of the fixed profile members (1) for enabling the upper profile members (2) to move with respect to the lower profile members (1), the unlocking stability is obtained from the fact that the pins (27) overpass the dead point of the system that is formed by the sectors (22, 23) and, therefore, the re-engagement can be made only by a return of the backing portion in a position tending to the vertical.

## Patentansprüche

1. Fahrzeugsitzgleitschiene mit fester Rückkehrposition, bei welcher die obere Profilschiene (2) entlang der unteren, unmittelbar oder mittelbar mit dem Fahrzeugboden verbundenen und in bekannter Weise einen Riegel (3) aufweisenden Profilschiene (1) gleiten kann, wobei der Riegel (3) mit einem Kamin, dessen Zähne mit einer von der festen Profilschiene (1) getragenen Zahnstange zusammenwirken, versehen und auf einer Achse (4) drehbar ist und der Wirkung einer Stabfeder (7) derart unterliegt, daß der Kamin des Riegels in die Zähne der Zahnstange eingreift,
**dadurch gekennzeichnet,**
daß der Boden der unteren Profilschiene (1) einen Hemmschuh (10) aufweist, der durch ein L-förmiges Teil mit zwei vertikalen Laschen (12, 13) gebildet ist, wobei die vordere Lasche (12) eine Achse (14) trägt, auf welcher ein Riegel (15) befestigt ist, dessen unteres Ende (15a) normalerweise auf dem Hemmschuh (10) ruht und in diese Position durch eine Schenkelfeder (16) zurückgeführt wird, die zum einen mit der vertikalen Lasche (12) und zum anderen mit dem oberen Teil des Riegels (15) verbunden ist,
daß zwei Lager (20) eine Welle (21) tragen, an deren Enden zwei jeweils einen Anschlag (26) und einen Zapfen (27) tragende Sektorteile (22, 23) befestigt sind, wobei jeder Zapfen (27) dazu dient, auf jeden Riegel (3) zwecks Freigabe des Kamms jedes Riegels bezüglich der Zahnstange und außerdem zum Freigeben des Riegels (15) gegen die Wirkung der Feder (16) zu wirken, und jeder Anschlag (26) als Referenz zur Begrenzung des Rückweges der oberen Profilschiene (2) bezüglich der unteren Profilschiene (1) dient, wobei die Begrenzung bewirkt wird, wenn der Zapfen (27) mit dem oberen Bereich der Lasche (13) des Hemmschuhs (10) in Berührung kommt.

2. Gleitschiene nach Anspruch 1, dadurch gekennzeichnet, daß die Drehbewegung der Sektorteile (22, 23) mittels eines Kabels (25) bewirkt wird, welches mit seinem einen Ende an einem der Sektorteile (22, 23) und mit seinem anderen Ende an dem rotierenden Teil des zwischen der Sitzfläche und der Rücklehne (40) des entsprechenden Sitzes angeordneten Schwenkmechanismusses hängt.

3. Gleitschiene nach Anspruch 1 und 2, dadurch gekennzeichnet, daß, uni die Bewegung der oberen Profilschienen (2) bezüglich der unteren Profilschienen (1) zu ermöglichen, beim Entriegeln der Kämme der Riegel (3) bezüglich der Zahnstangen der festen Profilschienen (1) die Beständigkeit der Entriegelung dadurch bewirkt wird, daß die Zapfen (27) den Totpunkt des durch die Sektorteile (22, 23) gebildeten Systems überwinden und hierdurch das Wiedereinrasten nur aufgrund einer Rückbewegung der Rücklehne in eine gegen die Senkrechte tendierende Position geschehen kann.
